# FASCICULE DE BREVET EUROPEEN

(11) **EP 3 990 794 B1**
(45) Date de publication et mention de la délivrance du brevet: **11.11.2026**
(21) Numéro de dépôt: 20734419.3
(22) Date de dépôt: 29.06.2020
(51) Int. Cl.: F16C 35/04, F16C 35/077

(54) **MACHINE ÉLECTRIQUE TOURNANTE AVEC PALIER PLASTIQUE FORMANT CARTER**
ELEKTRISCHE DREHMASCHINE MIT KUNSTSTOFFLAGERGEHÄUSE
ROTATING ELECTRIC MACHINE WITH PLASTIC BEARING FORMING HOUSING

(30) Priorité: 27.06.2019 FR 1907014
(43) Date de publication de la demande: 04.05.2022
(73) Titulaire: Valeo Electrification, 95800 Cergy (FR)
(72) Inventeur: FAVEROLLE, Pierre, 94000 CRETEIL (FR); EL BARAKA, Khadija, 94000 CRETEIL (FR); THUEUR, Olivier, 94000 CRETEIL (FR); SAVARY, Paul, 94000 CRETEIL (FR); JUGOVIC, Svetislav, 94000 CRETEIL (FR); OUAZZANI JAMIL, Othmane, 94000 CRETEIL (FR); COLLIER, Grégory, 94000 CRETEIL (FR)
(74) Mandataire: Valeo Powertrain Systems
(86) Numéro de dépôt international: PCT/EP2020/068294
(87) Numéro de publication internationale: WO 2020/260712

(56) Documents cités:
- WO-A1-03/042560
- WO-A1-2016/055391
- DE-A1- 102007 013 937
- DE-B3- 102005 045 178
- DE-B3- 102005 046 010
- FR-A1- 3 056 840
- US-A- 5 650 678
- US-B2- 9 172 283

## Description

La présente invention porte sur une machine électrique tournante comportant un palier plastique. L'invention trouve une application particulièrement avantageuse, mais non exclusive, avec les machines électriques réversibles de forte puissance pouvant fonctionner en mode alternateur et en mode moteur accouplées avec un élément tel qu'un réducteur de boîte de vitesses ou une poulie.

De façon connue en soi, les machines électriques tournantes comportent un stator et un rotor solidaire d'un arbre. Le stator est monté dans un carter configuré pour porter à rotation un arbre sur des paliers formant carter par l'intermédiaire de roulements. Il est connu de former les paliers en matériau métallique. De tels paliers métalliques sont lourds, ce qui alourdit la machine. Ceci va à l'encontre de l'objectif de diminuer la masse de machine, dans le but de limiter les émissions d'éléments polluants rejetés par les moteurs thermiques tels que le CO2, prérequis nécessaire au respect des normes antipollution. Certains carters de moteurs électriques peuvent être formés en matière plastique, comme illustré dans le document US9172283B2 et correspondant au préambule de la revendication 1, ou comporter des éléments en plastique, comme illustré dans les documents FR3056840A et WO03/042560A1.

La présente invention vise à remédier efficacement à cet inconvénient en proposant une machine électrique tournante comportant un stator polyphasé entourant un rotor monté sur un arbre d'axe correspondant à l'axe de la machine électrique, le stator entourant le rotor et étant monté dans un carter muni d'un palier avant et d'un palier arrière, les paliers avant et arrière formant carter par l'intermédiaire de roulements, l'un au moins des paliers comprenant un corps réalisé dans un premier matériau plastique et au moins un élément additionnel réalisé dans un deuxième matériau, le corps du palier comprenant une jupe du palier et dans laquelle l'élément additionnel du palier est un élément de renfort moulé dans ladite jupe du palier.

L'invention permet d'obtenir un palier plus léger qui répond ainsi favorablement aux contraintes de réduction de la masse de la machine. Certains plastiques peuvent perdre 50% de leur rigidité entre 25°C de température ambiante et 150°C de température ambiante. L'ajout d'un élément localisé dans les zones les plus sollicitées thermiquement et mécaniquement permet de renforcer localement le palier vis-à-vis des contraintes thermique et mécanique sans augmenter la masse du palier.

Selon d'autres caractéristiques prises isolément ou en combinaison :
- le premier matériau plastique est l'un parmi un matériau thermoplastique non chargé, un matériau thermoplastique chargé en fibre ou en charges, un matériau plastique thermodurcissable non chargé, un matériau plastique thermodurcissable chargé en fibre ou en charges, et le deuxième matériau est l'un parmi un matériau plastique chargé en fibres ou en charge, un métal ou un alliage métallique ;
- le palier comprend des pattes de fixation au véhicule, le corps comprenant lesdites pattes de fixation, l'élément additionnel étant une bande surmoulée dans au moins une des dites pattes ;
- le palier comprend des logements pour tirants adaptés pour y insérer des tirants de maintien des paliers avant et arrière ensemble, le corps comprenant au moins un logement pour tirant, l'élément additionnel étant une bande surmoulée dans ledit logement ;
- l'élément additionnel comprend au moins une patte de fixation dudit palier à un véhicule ;
- le palier comprend une paroi transversale d'où s'étend un nez en saillie, dont l'élément additionnel comprend une deuxième partie de la paroi transversale et ledit nez ;
- l'élément additionnel comprend également des bras de renfort s'étendant radialement depuis une circonférence extérieure de la deuxième partie de la paroi transversale ;
- le palier comprend une capsule de roulement adaptée pour y monter un roulement permettant la mise en rotation d'un arbre dans ledit roulement dont l'élément additionnel comprend ladite capsule.

Selon une autre réalisation, le deuxième matériau est choisi plus solide mécaniquement et plus stable thermiquement que le matériau précédent.

Selon une autre réalisation, Les proportions du premier et du deuxième matériau sont telles que le premier matériau occupe 60% à 90% de la masse totale de matériau formant le palier, avantageusement 80%.

Selon une autre réalisation, l'élément additionnel est moulé dans le corps.

L'invention sera mieux comprise à la lecture de la description qui suit et à l'examen des figures qui l'accompagnent. Ces figures ne sont données qu'à titre illustratif mais nullement limitatif de l'invention.
La [Figure 1] est une vue en coupe longitudinale d'une machine électrique tournante;
La [Figure 2] est une vue en perspective de l'intérieur d'un palier de la machine ;
La [Figure 3] est une vue en perspective de l'extérieur d'un palier de la machine ;

Les éléments identiques, similaires, ou analogues, conservent la même référence d'une figure à l'autre.

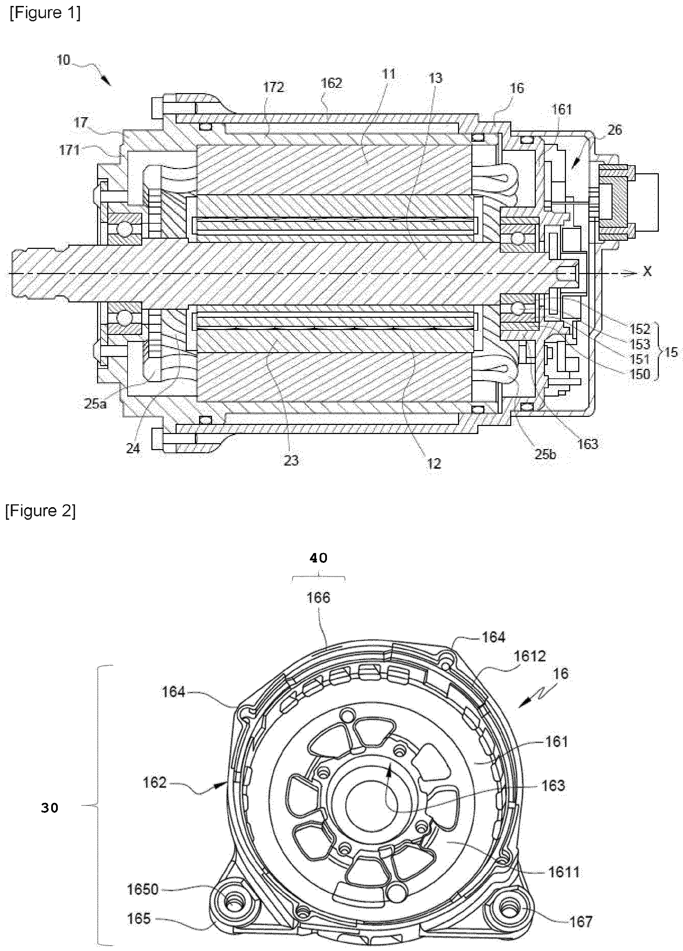

Dans la suite de la description, on considère une orientation d'avant en arrière, une orientation allant de gauche à droite sur la figure 1. Ainsi, on entend par un élément « arrière » un élément situé du côté du module électrique de commande 26, et par un élément « avant » un élément situé du côté opposé. Les dénominations axiales, radiales, extérieures et intérieures se réfèrent à l'axe X traversant en son centre l'arbre 13. La direction axiale correspond à l'axe X alors que les orientations radiales correspondent à des plans concourants, et notamment perpendiculaires, à l'axe X. Pour les directions radiales, les dénominations extérieure ou intérieure s'apprécient par rapport au même axe X, la dénomination intérieure correspondant à un élément orienté vers l'axe, ou plus proche de l'axe par rapport à un second élément, la dénomination extérieure désignant un éloignement de l'axe.

La figure 1 montre une machine électrique tournante 10 comportant un stator 11 polyphasé entourant un rotor 12 monté sur un arbre 13 d'axe X correspondant à l'axe de la machine électrique 10. Le stator 11 entoure le rotor 12 avec présence d'un entrefer entre la périphérie interne du stator 11 et la périphérie externe du rotor 12. Le stator 11 est monté dans un carter muni d'un palier avant 17 et d'un palier arrière 16.

Cette machine électrique 10 est destinée à être accouplée à un réducteur de boîte de vitesses. La machine est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine pourra par exemple être comprise entre 5kW et 50kW.

Plus précisément, le rotor 12 comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor.

Par ailleurs, le stator 11 comporte un corps 23 constitué par un paquet de tôles ainsi qu'un bobinage 24. Le corps du stator 23 est muni de dents s'étendant depuis une périphérie interne d'une culasse annulaire et délimitant deux à deux des encoches pour le montage du bobinage 24 du stator 11.

Le bobinage 24 comporte un ensemble d'enroulements de phase traversant des encoches et formant des chignons 25a, 25b s'étendant axialement en saillie de part et d'autre du corps de stator 23. Ces enroulements sont par exemple des enroulements doubles triphasés connectés en étoile, destinés à être reliés à un module électrique de commande 26 via un interconnecteur par exemple.

Structurellement, comme on peut le voir sur la figure 1 et détaillé à la figure 2, le palier arrière 16 comporte une paroi transversale 161 munie en son centre d'une ouverture. Un muret pourra éventuellement s'étendre axialement depuis la périphérie de l'ouverture. Le palier 16 comporte, en outre, une jupe 162 s'étendant en saillie à partir d'une périphérie externe de la paroi transversale 161. La jupe présente une forme annulaire d'orientation axiale en s'étendant vers le palier arrière 16.

De manière similaire, le palier avant 17 comporte également une paroi transversale 171 ainsi qu'une jupe 172 issue de la périphérie externe de la paroi transversale 171. La jupe 172 présente une forme annulaire d'orientation axiale. Les jupes 162 et 172 sont dirigées axialement l'une vers l'autre et sont solidarisées l'une à l'autre de sorte à former un carter contenant la machine.

Dans la suite de la description ce qui sera décrit au sujet du palier arrière 16 pourra aussi être appliqué au palier avant 17.

L'un au moins des deux paliers a avantageusement un corps 30 réalisé dans un premier matériau plastique et au moins un élément additionnel 40 réalisé dans un deuxième matériau. Dans la suite de la description, le corps 30 comprendra toutes les parties du palier formées du premier matériau plastique polymère ou composite (typiquement la jupe du palier ou au moins une partie de la paroi transversale) et l'élément additionnel 40 comprendra toutes les parties du palier formées du deuxième matériau (typiquement un élément de renfort ou un élément structurel). Le matériau polymère ou composite pourra être chargé ou non chargé.

Le premier matériau est par exemple un matériau thermoplastique typiquement du polyamide (PA), du sulfure de polyphénylène (PPS) ou du polyphthalamide (PPA). Certains plastiques peuvent perdre 50% de leur rigidité entre 25°C de température ambiante et 150°C de température ambiante. Le matériau thermoplastique pourra être chargé ou non chargé. En variante le premier matériau plastique est un matériau plastique thermodurcissable chargé ou non chargé. Les charges pourront être l'une parmi du métal, du carbone, une fibre textile mécanique ou une fibre animale ou végétale, telle que de la soie d'araignée ou du nerf de bœuf ou du kevlar ou encore du chanvre, ou du graphite, de la fibre de verre, de l'alumine ou du cuivre. Un matériau intéressant sera par exemple le polyphthalamide chargé entre 30% et 50% avec de la fibre de verre.

Le deuxième matériau est choisi plus solide mécaniquement et plus stable thermiquement que le matériau précédent. Le deuxième matériau est par exemple un matériau plastique chargé. En variante le deuxième matériau est un métal tel que de l'aluminium, de l'acier, ou un alliage métallique. Les charges pourront être l'une parmi du métal, du carbone, une fibre textile mécanique ou une fibre animale ou végétale, telle que de la soie d'araignée ou du nerf de bœuf ou du kevlar ou encore du chanvre, ou du graphite, de la fibre de verre, de l'alumine ou du cuivre.

Les matériaux précédemment énumérés permettent de solutionner les problèmes de tenue en température dans les zones où la température monte beaucoup, comme au niveau de la capsule ou de la jupe du palier, comme on le verra par la suite, ou les problèmes de tenue mécanique dans les zones à forte contraintes mécaniques comme au niveau des vis d'assemblage.

Certaines charges pourront également permettre d'assurer la conduction, notamment pour le raccord des masses, sans avoir à prévoir des pistes dédiées dans le palier plastique non conducteur.

Les proportions du premier et du deuxième matériau sont telles que le premier matériau occupe 60% à 90% de la masse totale de matériau formant le palier, avantageusement 80%.

Dans un premier exemple, la jupe 162 du palier est dans un premier plastique et un élément de renfort 166 dans un deuxième matériau tel que du métal est moulé,surmoulé ou assemblé dans la jupe 162 du palier. Cela permet notamment de protéger la partie de la jupe du palier de la thermique du stator et aider à positionner de façon axiale le stator. Comme autre exemple, l'élément de renfort en métal 166 peut par exemple être fretté sur la surface du stator moulé,surmoulé ou assemblé. Pour cela l'élément de renfort 166, tel qu'un insert métallique, est une bague de forme cylindrique s'étendant axialement sur toute la hauteur du stator. L'élément de renfort est chauffé, par exemple par induction, pour être déformable, puis l'insert métallique est monté sur le stator 11, en contact avec la culasse du stator, et lors du refroidissement l'insert se rétracte et est ainsi solidarisé au stator. Le palier est moulé sur l'insert métallique 165 fretté sur le stator 11. L'insert métallique 166 est donc moulé dans la jupe 162 du palier

En outre, au moins un palier 16 comprend des pattes de fixation au véhicule 165 permettant le montage du palier sur le véhicule. Le palier 16 comprend par exemple avantageusement des « oreilles » s'étendant depuis la jupe 162 du palier sensiblement dans le même plan que le plan de la paroi transversale 161 du palier. Ces oreilles sont percées d'ouvertures axiales 1650 adaptées pour y insérer un moyen de fixation du palier au véhicule.

Dans un deuxième exemple, au moins une des pattes de fixation 165 est en premier plastique, une bande 167 de deuxième matériau étant surmoulée dans la patte. La bande est par exemple une bande annulaire de diamètre sensiblement le même (légèrement supérieur) au diamètre de l'ouverture axiale 1650. Lors de la fabrication, le palier plastique 16 est moulé après insertion au préalable de la bande dans le moule. Une telle bande, par exemple en carbone, permet de consolider la patte de fixation, vis-à-vis des contraintes de montage du palier au véhicule, auxquelles le plastique ne résisterait pas.

En variante du deuxième exemple, la jupe du palier 162 est en premier matériau plastique, et au moins une des pattes de fixation 165 du palier fixée au véhicule est intégralement en un deuxième matériau constituant l'élément additionnel. La patte de fixation est par exemple moulée ou assemblée au niveau de son contour dans le plastique de la jupe 162 localement.

En outre, chaque palier comprend des logements pour tirants. Ces logements pourront être réalisés directement dans la matière du corps ou de l'élément additionnel, ou également être une pièce ajoutée qui sera assemblée ou moulée dans le corps ou l'élément additionnel. Les deux paliers sont maintenus assemblés l'un à l'autre par insertion de tirants dans ces logements. Localement la jupe est épaissie c'est-à-dire que la jupe a une plus grosse épaisseur de matière selon la direction radiale. Les logements 164 sont percés axialement dans les surépaisseurs prévues au niveau de la jupe du palier 162, pour recevoir les tirants. Ces surépaisseurs sont localisées au niveau de l'extrémité axiale de la jupe qui est opposée à l'extrémité de la jupe d'où s'étend la paroi transversale 161.

Dans un troisième exemple, la jupe 162 et au moins un logement pour tirant 164 formé dans ladite jupe sont formés dans le premier matériau plastique, et une bande en un deuxième matériau tel que du métal est moulée dans le logement pour tirant (non illustré). La bande typiquement en carbone est moulée lors du moulage du palier au niveau du logement. La bande de carbone sera avantageusement taraudée, pour permettre l'assemblage des deux paliers 16, 17 ensemble, par vissage. Le plastique du palier n'étant pas assez solide pour résister aux contraintes de montage des paliers entre eux c'est à dire au couple de serrage, la bande permettra de renforcer les logements pour tirants pour résister au vissage.

Dans une variante de réalisation, le palier avant en matériau plastique est collé au stator 11 par une colle thermiquement conductible. Pour cela l'extrémité de la jupe d'un palier est en contact avec l'autre extrémité et forme un anneau sur lequel on dispose de la colle. Les paliers avant 17 et arrière 16, en plastique, sont alors collés entre eux par une colle, ou soudure à chaud. Cette dernière solution permet de réduire la masse, de simplifier la structure de la machine et de réduire le coût étant donnée la suppression de tirants.

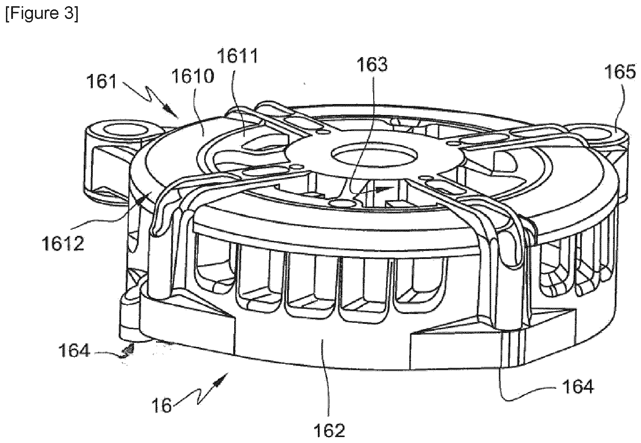

Dans un autre mode de réalisation, illustré aux figures 2 et 3, qui pourra être combiné avec le mode précédent, la jupe du palier 162 et une première partie de la paroi transversale 1610 s'étendant depuis la jupe vers l'axe de la machine, sont en premier matériau plastique. Une deuxième partie de la paroi transversale 1611 s'étendant depuis la première partie de la paroi transversale 1610 est dans un deuxième matériau tel que du métal. Le muret 163 s'étend depuis la deuxième partie 1611 dans ce même deuxième matériau. Dans ce cas, le deuxième matériau est par exemple en matière métallique pour améliorer la tenue du corps en matériau plastique, en jouant le rôle de renfort.

La deuxième partie métallique 1611 est par exemple préalablement moulée puis la première partie du palier en plastique 1610 est moulée sur la deuxième partie 1611. En variante, la deuxième partie 1611 est fixée à la première partie du palier 1610 avec des vis. La partie métallique 1611 permet de maintenir notamment la conduction sans avoir besoin de prévoir des traces de raccord de masse par exemple, alors que la partie plastique a les propriétés avantageuses de légèreté permettant l'allègement global de la machine. La portion en métal permet notamment d'assurer une bonne rigidité au palier.

En particulier pour ce mode de réalisation, avantageusement la partie métallique 1611 pourra comprendre des bras de renfort 1612 s'étendant radialement depuis la circonférence extérieure de la deuxième partie de la paroi transversale 1611, comme illustré à la figure 3, formant un squelette métallique du palier plastique. Les bras 1612 ont une forme coudée, avec par exemple une première portion dans le plan de la deuxième partie 1611 de la paroi transversale et une deuxième portion s'étendant transversalement à la première portion, dans le plan de la jupe 162. Les bras de renfort 1612 seront avantageusement au nombre de quatre. En variante les bras 1612 présentent seulement une portion dans le plan de la paroi transversale 161. En particulier dans le cas d'une machine refroidie à air dans laquelle le palier sera nécessairement très ajouré pour permettre un bon refroidissement, un tel squelette métallique permettra de garder une bonne rigidité globale du palier.

La partie en plastique est avantageusement moulée autour de la partie en métal, de sorte que la première portion du bras de renfort 1612 est moulée dans la première partie de la paroi transversale 1610 et la deuxième portion de bras de renfort 1612 est moulée dans la jupe du palier 162.

Afin d'assurer un montage à rotation de l'arbre 13 par rapport au palier arrière 16, un roulement 15, illustré à la figure 1, est intercalé entre l'arbre 13 et le palier avant 16. Le roulement 15 pourra être par exemple un roulement à billes ou à aiguilles. L'ouverture dans le palier, munie d'un muret forme un logement pour ledit roulement, la périphérie interne du muret 163 portant donc le roulement avant 15.

Plus précisément le roulement 15 comprend une bague extérieure 151 et une bague intérieure 152, disposées concentriquement l'une dans l'autre, des billes de roulement 153 étant disposées entre les deux bagues. La bague intérieure du roulement 152 est montée serrée sur l'arbre 13 du rotor. La bague extérieure 151 est montée solidaire d'une capsule 150 appartenant également au roulement. La paroi intérieure de la capsule 150 coopère avec la bague extérieure du roulement 151. La paroi extérieure de la capsule 150 coopère avec la périphérie interne du muret 163 du palier arrière.

La capsule d'ajustage 150 est un élément mécanique dont la jupe annulaire axiale permet l'ajustement entre la bague extérieure du roulement 151 et la paroi annulaire du muret recevant ledit roulement. Aussi, la capsule 150 a notamment pour fonction de bloquer en rotation la bague extérieure du roulement 151, de permettre un jeu axial entre le roulement et la paroi annulaire du muret, ainsi que de compenser la dilatation différentielle entre la bague extérieure du roulement 151 et la paroi annulaire du muret 163, au cours du fonctionnement de la machine.

La zone de roulement voit des températures de l'ordre de 160°C. La capsule 150 est avantageusement choisie en un deuxième matériau plastique autre que le premier plastique formant palier et notamment formant la paroi transversale 161 s'étendant en le muret 163. Le deuxième matériau est avantageusement un matériau plastique thermodurcissable. En variante la capsule est en métal ou en acier et peut être moulée dans le muret 163.

Le dispositif de roulement formé par les deux bagues 151, 152 séparées par les billes du roulement est emmanché glissant dans la capsule. La capsule est moulée dans l'ouverture définie par le muret. En variante, la capsule est emmanchée avec ou sans jeu dans ladite ouverture. La capsule 150 est par exemple moulée dans la jupe annulaire du muret 163. La capsule 150 sera avantageusement usinée après moulage dans le muret 163 du palier. La capsule 150 présente avantageusement sur sa paroi extérieure un ergot, c'est-à-dire une extrusion de matière permettant d'améliorer le maintien du roulement 15 dans le muret 163 du palier, par moulage de cette extrusion dans le muret 163 du palier.

Une telle description s'applique aussi au cas d'un roulement monté dans le palier avant avec éventuellement une capsule.

La machine peut notamment être refroidie par un liquide circulant dans une chambre formée par les deux paliers. Des joints d'étanchéité situés entre les paliers avant et arrière peuvent par exemple être intégrés dans les paliers plastiques lors de l'injection (bi-matière) ou collés.

Bien entendu, la description qui précède a été donnée à titre d'exemple uniquement et ne limite pas le domaine de l'invention qui est défini par les revendications ci-jointes.

En outre, les différentes caractéristiques, variantes, et/ou formes de réalisation de la présente invention peuvent être associées les unes avec les autres selon diverses combinaisons, dans la mesure où elles sont couvertes par les revendications.

## Revendications

1. Machine électrique tournante comportant un stator polyphasé entourant un rotor monté sur un arbre (13) d'axe X correspondant à l'axe de la machine électrique, le stator entourant le rotor et étant monté dans un carter muni d'un palier avant (16) et d'un palier arrière (17), les paliers avant (16) et arrière (17) formant carter par l'intermédiaire de roulements, l'un au moins des paliers comprenant un corps (30) réalisé dans un premier matériau plastique et au moins un élément additionnel (40) réalisé dans un deuxième matériau, **caractérisée en ce que**
le corps (30) du palier comprend une jupe du palier (162) et l'élément additionnel (40) du palier est un élément de renfort (166) moulé dans ladite jupe du palier.

2. Machine électrique tournante selon la revendication 1 dans laquelle le premier matériau plastique du palier est l'un parmi :
a- un matériau thermoplastique non chargé,
b- un matériau thermoplastique chargé en fibre ou en charges,
c- un matériau plastique thermodurcissable non chargé,
d- un matériau plastique thermodurcissable chargé en fibre ou en charges, et le deuxième matériau est l'un parmi
a- un matériau plastique chargé en fibres ou en charge,
b- un métal ou un alliage métallique.

3. Machine électrique tournante selon l'une des revendications précédentes dans laquelle le palier comprend des pattes de fixation au véhicule (165), le corps (30) du palier comprenant lesdites pattes de fixation, l'élément additionnel (40) du palier étant une bande (167) surmoulée dans au moins une des dites pattes.

4. Machine électrique tournante selon l'une des revendications précédentes dont le palier comprend des logements pour tirants (164) adaptés pour y insérer des tirants de maintien des paliers avant et arrière ensemble, le corps (30) du palier comprenant au moins un logement pour tirant, l'élément additionnel (40) du palier étant une bande surmoulée dans ledit logement.

5. Machine électrique tournante selon l'une quelconque des revendications précédentes dans laquelle l'élément additionnel (40) du palier comprend au moins une patte de fixation dudit palier à un véhicule.

6. Machine selon l'une des revendications précédentes dans laquelle le palier comprend une paroi transversale (161) d'où s'étend un nez en saillie (163), dont l'élément additionnel (40) comprend une deuxième partie de la paroi transversale (1611) et ledit nez (163).

7. Machine électrique tournante selon la revendication 6 dans laquelle l'élément additionnel (40) du palier comprend également des bras de renfort (1612) s'étendant radialement depuis une circonférence extérieure de la deuxième partie de la paroi transversale (1611) du palier.

8. Machine électrique tournante selon l'une quelconque des revendications précédentes dans laquelle le palier comprend une capsule de roulement (150) adaptée pour y monter un roulement permettant la mise en rotation de l'arbre (13) dans ledit roulement dont l'élément additionnel (40) du palier comprend ladite capsule (150).

## Patentansprüche

1. Rotierende elektrische Maschine mit einem mehrphasigen Stator, der einen Rotor umgibt, der auf einer Welle (13) mit der Achse X montiert ist, die der Achse der elektrischen Maschine entspricht, wobei der Stator den Rotor umgibt und in einem Gehäuse montiert ist, das mit einem vorderen Lager (16) und einem hinteren Lager (17) versehen ist, - wobei das vordere (16) und das hintere (17) Lager über Wälzlager ein Gehäuse bilden, - wobei mindestens eines der Lager einen Körper (30) aus einem ersten Kunststoffmaterial und mindestens ein zusätzliches Element (40) aus einem zweiten Material umfasst, **dadurch gekennzeichnet, dass** der Körper (30) des Lagers umfasst eine Lagerschürze (162), das zusätzliche Element (40) des Lagers ein Verstärkungselement (166) ist, das in die besagte Lagerschürze eingegossen ist.

2. Rotierende elektrische Maschine nach Anspruch 1, bei der das erste Kunststoffmaterial des Lagers eines der folgenden ist:
a- ein ungefülltes thermoplastisches Material,
b- ein mit Fasern oder Füllstoffen gefülltes thermoplastisches Material,
c- ein ungefülltes duroplastisches Kunststoffmaterial,
d- ein mit Fasern oder Füllstoffen gefülltes duroplastisches Kunststoffmaterial,
und das zweite Material eines der folgenden ist:
a- ein mit Fasern oder Füllstoffen gefülltes Kunststoffmaterial,
b- ein Metall oder eine Metalllegierung.

3. Rotierende elektrische Maschine nach einem der vorhergehenden Ansprüche, bei der das Lager Fahrzeugbefestigungslaschen (165) umfasst, wobei der Körper (30) des Lagers die besagten Befestigungslaschen umfasst und das zusätzliche Element (40) des Lagers ein Band (167) ist, das in mindestens eine der besagten Laschen eingespritzt ist.

4. Rotierende elektrische Maschine nach einem der vorhergehenden Ansprüche, deren Lager Aufnahmen für Zuganker (164) umfasst, die dazu geeignet sind, Zuganker zum Zusammenhalten der vorderen und hinteren Lager aufzunehmen, wobei der Körper (30) des Lagers mindestens eine Zugankeraufnahme umfasst und das zusätzliche Element (40) des Lagers ein in die besagte Aufnahme eingegossenes Band ist.

5. Rotierende elektrische Maschine nach einem der vorhergehenden Ansprüche, bei der das zusätzliche Element (40) des Lagers mindestens eine Befestigungslasche des besagten Lagers an einem Fahrzeug umfasst.

6. Maschine nach einem der vorhergehenden Ansprüche, bei der das Lager eine Querwand (161) umfasst, von der sich ein vorstehender Zapfen (163) erstreckt, wobei das zusätzliche Element (40) einen zweiten Teil der Querwand (1611) und den besagten Zapfen (163) umfasst.

7. Rotierende elektrische Maschine nach Anspruch 6, bei der das zusätzliche Element (40) des Lagers auch Verstärkungsarme (1612) umfasst, die sich radial von einem Außenumfang des zweiten Teils der Querwand (1611) des Lagers erstrecken.

8. Rotierende elektrische Maschine nach einem der vorhergehenden Ansprüche, bei der das Lager eine Wälzlagerkapsel (150) umfasst, die dazu geeignet ist, ein Wälzlager aufzunehmen, das die Rotation der Welle (13) in dem besagten Wälzlager ermöglicht, wobei das zusätzliche Element (40) des Lagers die besagte Kapsel (150) umfasst.

## Claims

1. Rotating electrical machine comprising a polyphase stator surrounding a rotor mounted on a shaft (13) with axis X corresponding to the axis of the electrical machine, the stator surrounding the rotor and being mounted in a housing provided with a front bearing (16) and a rear bearing (17), the front (16) and rear (17) bearings forming a housing by means of rolling bearings, at least one of the bearings comprising a body (30) made of a first plastic material and at least one additional element (40) made of a second material, **characterized in that** the body (30) of the bearing comprises a skirt of the bearing (162) and the additional element (40) of the bearing is a reinforcing element (166) moulded into said bearing skirt.

2. Rotating electrical machine according to claim 1 in which the first plastic material of the bearing is one of:
a- an unfilled thermoplastic material,
b- a thermoplastic material filled with fibres or fillers,
c- an unfilled thermosetting plastic material,
d- a thermosetting plastic material filled with fibres or fillers,
and the second material is one of
a- a plastic material filled with fibres or fillers,
b- a metal or a metallic alloy.

3. Rotating electrical machine according to one of the preceding claims in which the bearing comprises vehicle attachment lugs (165), the body (30) of the bearing comprising said attachment lugs, the additional element (40) of the bearing being a strip (167) overmoulded into at least one of said lugs.

4. Rotating electrical machine according to one of the preceding claims whose bearing comprises tie rod housings (164) adapted to insert therein tie rods for holding the front and rear bearings together, the body (30) of the bearing comprising at least one tie rod housing, the additional element (40) of the bearing being a strip overmoulded into said housing.

5. Rotating electrical machine according to any one of the preceding claims in which the additional element (40) of the bearing comprises at least one lug for attaching said bearing to a vehicle.

6. Machine according to one of the preceding claims in which the bearing comprises a transverse wall (161) from which extends a projecting nose (163), whose additional element (40) comprises a second part of the transverse wall (1611) and said nose (163).

7. Rotating electrical machine according to claim 6 in which the additional element (40) of the bearing also comprises reinforcing arms (1612) extending radially from an outer circumference of the second part of the transverse wall (1611) of the bearing.

8. Rotating electrical machine according to any one of the preceding claims in which the bearing comprises a rolling bearing capsule (150) adapted to mount therein a rolling bearing enabling the rotation of the shaft (13) in said rolling bearing whose additional element (40) of the bearing comprises said capsule (150).
